# EUROPÄISCHE PATENTANMELDUNG

(11) **EP 4 717 501 A1**
(43) Veröffentlichungstag der Anmeldung: **01.04.2026**
(21) Anmeldenummer: 25198256.7
(22) Anmeldetag: 26.08.2025
(51) Int. Cl.: B60L 3/00, B60L 3/04

(54) **VERFAHREN ZUM VERBRINGEN EINES ANTRIEBSSYSTEMS IN EINEN SICHEREN ZUSTAND, ANTRIEBSSYSTEM, SOWIE FAHRZEUG**

(30) Priorität: 27.09.2024 DE 102024128030
(71) Anmelder: VOLKSWAGEN AG, 38440 Wolfsburg (DE); AUDI Aktiengesellschaft, 85057 Ingolstadt (DE)
(72) Erfinder: Rattey, Robert, 38159 Vechelde (DE); Till, Stefan, 85049 Ingolstadt (DE)
(74) Vertreter: Hofstetter, Schurack & Partner

(57) **Zusammenfassung**

Die Erfindung betrifft ein Verfahren zum Verbringen eines Antriebssystems (2) in einen sicheren Zustand. Bei dem Verfahren werden die folgenden Schritte durchgeführt: Verbringen (S20) des Antriebssystems (2) in einen Freilauf, wenn eine an einem Zwischenkreiskondensator (6) des Antriebssystems (2) anliegende Spannung (Udc) eine erste Grenzwertspannung (Uth1, Uth1_t1, Uth1_t2, Uth1_t3) überschreitet, und Verbringen (S40) des Antriebssystems (2) in einen aktiven Kurzschluss, wobei das Verbringen (S20) in den Freilauf und das Verbringen (S40) in den aktiven Kurzschluss als eine zeitliche Abfolge von Freilauf und aktivem Kurzschluss durchgeführt wird, und wobei das Antriebssystem (2) ausschließlich dann aus dem Freilauf in den aktiven Kurzschluss verbracht wird, wenn die an dem Zwischenkreiskondensator (6) anliegende Spannung (Udc) eine vorgegebene zweite Grenzwertspannung (Uth2) überschreitet oder wenn eine vorgegebene Zeitspanne abgelaufen ist.

## Beschreibung

Ein Aspekt der Erfindung betrifft ein Verfahren zum Verbringen eines Antriebssystems in einen sicheren Zustand. Weitere Aspekte der Erfindung betreffen ein derartiges Antriebssystem sowie ein Fahrzeug mit einem derartigen Antriebssystem.

Batterieelektrische Fahrzeuge (BEV) finden immer weitere Verbreitung. Im Falle einer Wartung oder eines Unfalls, ist es jedoch erforderlich, dass ein Antriebssystem eines derartigen Fahrzeugs in einen sicheren Modus oder einen sicheren Zustand verbracht werden kann. Der sogenannte aktive Kurzschluss wird bei Fahrzeugen mit elektrifiziertem Antriebskonzept, das einen erregten Rotor enthält, wie beispielsweise bei PSM (permanenterregte Synchronmaschine) und FSM (fremderregte Synchronmaschine), als sicherer Zustand betrachtet. Ein wesentlicher Vorteil des aktiven Kurzschlusses ist die Spannungsfreiheit des Antriebssystems. Zum Herbeiführen des aktiven Kurzschlusses werden bei einem Antriebsmotors des Antriebssystems Anschlussleitungen des Antriebsmotors kurzgeschlossen.

Bei der Alternative Freilauf kann es zu einer unkontrollierten Rückspeisung von Energie in einen Hochvoltenergiespeicher des Antriebssystems und zu einem ungewollten Bremsmoment kommen. Eine fehlende Drehzahl- und/oder Spannungsinformation oder eine Fehlfunktion innerhalb eines Pulswechselrichters, wie beispielsweise der Ausfall eines Prozessors, eines Gatetreibers oder dergleichen, des Antriebssystems muss unabhängig davon immer zu einem sofortigen aktiven Kurzschluss führen.

Die DE 10 2021 208 168 A1 beschreibt eine Steuervorrichtung für ein Antriebssystem, das eine elektrische Maschine aufweist, die durch eine Leistungselektronik mit einem elektrischen Energiespeicher elektrisch verbunden ist, wobei die Steuervorrichtung eine Recheneinheit und mehrere Gate-Treiberschaltungen aufweist und dazu ausgebildet ist, bei Erfassen eines Fehlerfalls des Antriebssystems und/oder der Steuervorrichtung einen sicheren Betriebszustand in der Leistungselektronik einzustellen.

Die DE 10 2022 004 264 A1 zeigt ein Verfahren zum Betrieb eines Stromrichters in einem elektrischen Antriebssystem eines Fahrzeugs, wobei der Stromrichter derart betrieben wird, dass eine mit dem Stromrichter gekoppelte elektrische Maschine in einem Freilauf oder einem aktiven Kurzschluss betrieben wird.

Die DE 10 2022 202 956 B4 beschreibt ein Verfahren zur Ansteuerung eines Fahrzeugantriebs mit einer elektrischen Maschine und einem Inverter, der ansteuernd mit der elektrischen Maschine verbunden ist, wobei, wenn ein Fehler in dem elektrischen Antrieb oder in einer daran angeschlossenen Komponente auftritt, der Inverter einen aktiven Kurzschluss von Phasenanschlüssen der elektrischen Maschine erzeugt, oder der Inverter einen Freilaufzustand der elektrischen Maschine erzeugt.

Es ist Aufgabe der vorliegenden Erfindung, ein Verfahren und ein Antriebssystem zu schaffen, bei welchem ein zuverlässiges Verbringen des Antriebssystems in einen sicheren Zustand möglich ist.

Diese Aufgabe wird durch ein Verfahren und ein Antriebssystem gemäß den unabhängigen Ansprüchen gelöst.

Ein Aspekt der Erfindung betrifft ein Verfahren zum Verbringen eines Antriebssystems in einen sicheren Zustand. Das Verfahren weist insbesondere die folgenden Schritte auf:
- Verbringen des Antriebssystems in einen Freilauf, wenn eine an einem Zwischenkreiskondensator des Antriebssystems anliegende Spannung eine erste Grenzwertspannung überschreitet, und
- Verbringen des Antriebssystems in einen aktiven Kurzschluss,
wobei das Verbringen in den Freilauf und das Verbringen in den aktiven Kurzschluss als eine zeitliche Abfolge von Freilauf und aktivem Kurzschluss durchgeführt wird, und wobei das Antriebssystem ausschließlich dann aus dem Freilauf in den aktiven Kurzschluss verbracht wird, wenn die an dem Zwischenkreiskondensator anliegende Spannung eine vorgegebene zweite Grenzwertspannung überschreitet oder wenn eine vorgegebene Zeitspanne abgelaufen ist.

Durch ein derartiges Verfahren ist es möglich, während des Freilaufs die in der Induktivität eines Antriebsmotors des Antriebssystems gespeicherte Energie hinreichend weit abzubauen, wobei ein sich aufbauendes Bremsmoment ist bis zu diesem Zeitpunkt hinreichend klein ist, sodass es zu keinem Haftungsabriss von Reifen eines Fahrzeugs mit einem derartigen Antriebssystem und einer Straße führt, auf der sich das Fahrzeug fortbewegt. In dem auf den Freilauf folgenden aktiven Kurzschluss prägt sich daher nur ein sehr viel kleinerer transienter Strom aus, der damit vorteilhaft für Leistungsschalter in einem Pulswechselrichter des Antriebssystems und für Dauermagnete des Antriebsmotors ist. Es wird somit während des Freilaufs insbesondere eine unkontrollierte Rückspeisung von elektrischer Energie für beispielsweise wenige Millisekunden in einen Hochvoltenergiespeicher des Antriebssystems oder einen Zwischenkreiskondensator des Antriebssystems zugelassen.

Die beschriebene Überschreitung der Überspannung, also der ersten Grenzwertspannung, kann die Folge einer unvorhersehbaren Störung im Energieverteilsystem, insbesondere im Hochvoltenergieverteilungssystem, sein. Die Hochvoltschütze öffnen und trennen beispielsweise einen Inverter des Antriebsystems vom Energieverteilsystem und/oder von der Hochvoltbatterie, also den Hochvoltenergiespeicher. Das elektrische Antriebssystem ist möglicherweise in dieser Situation in einem generatorischen Arbeitspunkt und kann diese Energie nicht mehr in die Hochvoltbatterie abführen. Bei Überschreitung der ersten Grenzwertspannung wird der elektrische Inverter in den Freilauf kommandiert. Als Folge wird der generatorische Arbeitspunkt beendet, aber die in der elektrischen Maschine, also das Antriebssystem, gespeicherte magnetische Energie kann weiterhin durch die Freilaufdioden einen Stromeintrag und dadurch einen Spannungsanstieg im Zwischenkreiskondensator erzeugen. Erst bei Erreichen der der zweiten Grenzwertspannung kann der Spannungsanstieg durch einen aktiven Kurzschluss (AKS) gestoppt werden.

Durch diese Kombination aus Freilauf und aktiven Kurzschluss kann der Bauteilschutz des elektrischen Inverters erreicht werden. Magnetisch gespeicherte Energie baut sich in den Zwischenkreis ab und reduziert die Kurzschlussströme beim späteren aktiven Kurzschluss beträchtlich. Gleichzeitig kann die zweite Grenzwertspannung eingehalten und ein Überspannungsschaden anderer Hochvoltteilnehmern verhindert werden.

Das Antriebssystem umfasst bevorzugt den zuvor erwähnten Antriebsmotor, der beispielsweise eine permanenterregte Synchronmaschine (PSM) oder eine fremderregte Synchronmaschine (FSM) sein kann, den Hochvoltenergiespeicher und eine Leistungselektronik. Die Leistungselektronik umfasst die Leistungsschalter und den Zwischenkreiskondensator. Die Leistungsschalter und der Zwischenkreiskondensator können Teil eines Pulswechselrichters (PWR) der Leistungselektronik sein. Das Verfahren kann mit Hilfe des Antriebssystems, insbesondere mit Hilfe der Leistungselektronik, durchgeführt werden. Das Antriebssystem und/oder die Leistungselektronik kann eine Recheneinheit aufweisen.

Der sichere Zustand oder sichere Modus kann beispielsweise im Fall eines Unfalls, an dem das Fahrzeug beteiligt ist, oder im Fall einer Wartung des Fahrzeugs angefordert werden.

Insbesondere nimmt der Antriebsmotor den sicheren Zustand ein. Der sichere Zustand eines Antriebsmotors in Form einer permanenterregten Synchronmaschine ist je nach Drehzahl des Antriebsmotors und Spannung des Hochvoltenergiespeichers der aktive Kurzschluss. Ein wesentlicher Vorteil des aktiven Kurzschlusses ist die Spannungsfreiheit des Antriebssystems. Durch das Überschreiten der ersten Grenzwertspannung wird insbesondere ein Lastabwurf erkannt.

Als Alternative zum aktiven Kurzschluss bildet der Freilauf des Antriebssystems, insbesondere des Antriebsmotors, ebenfalls einen sicheren Zustand. Im Freilauf kann es allerdings zu einer unkontrollierten Rückspeisung von Energie in den Hochvoltenergiespeicher und zu einem ungewollten Bremsmoment kommen. Dies wird jedoch vorteilhafterweise dadurch verhindert, dass das Antriebssystem nur für die vorgegebene Zeitspanne, die wenige Millisekunden betragen kann, in den Freilauf verbracht wird. Hierdurch wird gewährleistet, dass sich das bei der Rückspeisung aufbauende Bremsmoment hinreichend klein ist, so dass es zu keinem Haftungsabriss von Reifen und Straße während des Freilaufs kommt. Danach wird das Antriebssystem in den aktiven Kurzschluss verbracht. Mit anderen Worten wird zuerst eine Freilaufphase und anschließend, insbesondere bei Erfüllung bestimmter Randbedingungen, wie dem Ablauf der vorgegebenen Zeitspanne oder dem Überschreiten der zweiten Grenzwertspannung, eine aktive Kurzschlussphase gestartet. Die vorgegebene Zeitspanne beträgt bevorzugt wenige Millisekunden. Hierdurch wird gewährleistet, dass sich das bei der Rückspeisung aufbauende Bremsmoment hinreichend klein ist, so dass es zu keinem Haftungsabriss von Reifen und Straße während des Freilaufs kommt.

Die erste Grenzwertspannung kann gegebenenfalls als "Grenzwertspannung-Reaktion-Freilauf" bezeichnet werden. Dies bedeutet dabei, dass bei einem Überschreiten der ersten Grenzwertspannung als Reaktion in den Freilauf geschaltet wird.

Die zweite Grenzwertspannung kann gegebenenfalls als "Grenzwertspannung-aktiver-Kurzschluss" bezeichnet werden. Dies bedeutet dabei, dass bei einem Überschreiten der zweiten Grenzwertspannung in den aktiven Kurzschluss geschaltet wird.

Die erste Grenzwertspannung und die zweite Grenzwertspannung unterscheiden sich in ihren Spannungswerten voneinander. Insbesondere ist die zweite Grenzwertspannung, insbesondere in allen Situationen, größer als die erste Grenzwertspannung.

Beispielsweise ergibt sich die erste Grenzwertspannung aus der aktuellen Betriebsspannung, also die aktuell anliegende Spannung, und einer Offset-Spannung. Diese Offset-Spannung kann eine Konstante sein, die beispielsweise zwischen 10V und 30V liegt. Dies kann abhängig von den jeweiligen elektrischen Eigenschaften des Antriebssystems sein.

Insbesondere weist die zweite Grenzwertspannung einen konstanten Wert auf.

Für ein beispielhaftes 800V-System kann die erste Grenzwertspannung einen Wert zwischen 400V und 800V aufweisen. Hier kann hingegen die zweite Grenzwertspannung einen Wert größer 800V, insbesondere einen Wert zwischen 800V und 1200V, bevorzugt einen Wert von beispielsweise 1000V betragen.

Für ein beispielhaftes 400V-System kann die erste Grenzwertspannung einen Wert zwischen 200V und 500V aufweisen. Hier kann hingegen die zweite Grenzwertspannung einen Wert größer 500V, insbesondere einen Wert zwischen 500V und 800V, bevorzugt einen Wert von beispielsweise 600V betragen.

Die soeben genannten Werte hinsichtlich der beiden Grenzwertspannungen sind nicht abschließend zu verstehen, sondern sollen einen kurzen Einblick über mögliche Werte geben. Speziell kann die Grenzwertspannung je nach Systemeigenschaften und/oder einer jeweiligen Einsatzsituation betreffend das Antriebssystem variieren.

In einem Ausführungsbeispiel wird die erste Grenzwertspannung dadurch dynamisch ermittelt, dass eine aktuelle Spannung gemessen und zu dieser ein fest vorgegebener Spannungsversatz addiert wird, um die erste Grenzwertspannung zu erhalten. Insbesondere wird die aktuelle Spannung an dem Zwischenkreiskondensator gemessen. Der Spannungsversatz kann auch als Offset oder als Spannungsoffset bezeichnet werden. Der Vorteil der dynamischen Ermittlung der ersten Grenzwertspannung liegt darin, dass im Vergleich zu einer fest vorgegebenen ersten Grenzwertspannung ein Spannungsunterschied zwischen der jeweiligen dynamisch ermittelten ersten Grenzwertspannung und der zweiten Grenzwertspannung meistens größer ist. Dies ist abhängig von einer Batteriespannung des Hochvoltenergiespeichers und dessen Ladezustand. Der größere Spannungsunterschied resultiert in einer längeren Freilaufzeit, in der mehr Energie aus dem Antriebsmotor abgebaut werden kann, was letztendlich zu einem geringeren Strom im aktiven Kurzschluss führt. Gegebenenfalls kann auf den aktiven Kurzschluss ganz verzichtet werden, da die zweite Grenzwertspannung nicht mehr erreicht wird.

Die soeben geschilderte dynamische Berechnung der ersten Grenzwertspannung kann zu einer möglichst hohen Spannungsdifferenz zwischen der ersten und zweiten Grenzwertspannung führen. Folglich kann die Energiemenge, die in den Zwischenkreiskondensator eingebracht werden kann, maximiert werden. Umso höher die abgebaute magnetische Energie ist, umso geringer sind die zu erwartenden Kurzschlussströme.

In einem Ausführungsbeispiel wird die erste Grenzwertspannung in vorgegebenen Zeitabständen aktualisiert. Die vorgegebenen Zeitabstände können beispielsweise 100 µs betragen.

In einem Ausführungsbeispiel wird die zweite Grenzwertspannung vorab ermittelt. Die zweite Grenzwertspannung kann somit ein fest vorgegebener Wert sein.

In einem Ausführungsbeispiel wird vor dem Verbringen des Antriebssystems in den aktiven Kurzschluss überprüft, ob die an dem Zwischenkreiskondensator anliegende Spannung größer als die zweite Grenzwertspannung ist oder ob die vorgegebene Zeitspanne abgelaufen ist, wobei das Antriebssystem in dem Freilauf verbleibt, wenn die an dem Zwischenkreiskondensator anliegende Spannung kleiner als die vorgegebene zweite Grenzwertspannung ist oder wenn die vorgegebene Zeitspanne nicht abgelaufen ist. Hierdurch kann die Freilaufphase möglichst lange genutzt werden, um die in der Induktivität des Antriebsmotors gespeicherte Energie möglichst weit abzubauen.

In einem Ausführungsbeispiel wird der Freilauf unabhängig von einer Rückspeisung von Energie in einen Hochvoltenergiespeicher des Antriebssystems und/oder in den Zwischenkreiskondensator durchgeführt. Mit anderen Worten wird der Freilauf ausschließlich oder nur in Abhängigkeit von der vorgegebenen Zeitspanne oder der ersten Grenzwertspannung durchgeführt.

In einem Ausführungsbeispiel wird während des Freilaufs Energie in den Hochvoltenergiespeicher und/oder in den Zwischenkreiskondensator rückgespeist. Dies ermöglicht einen effizienten Betrieb des Antriebssystems.

In einem Ausführungsbeispiel wird während des Freilaufs Energie in einem Antriebsmotor des Antriebssystems abgebaut.

In einem Ausführungsbeispiel wird die erste Grenzwertspannung im Falle eines Lastabwurfs überschritten. Das Antriebssystem wird im Falle des Lastabwurfs dann in den aktiven Kurzschluss verbracht, wenn die an dem Zwischenkreiskondensator anliegende Spannung größer als die vorgegebene erste Grenzwertspannung ist. Bei dem Lastabwurf werden Hochvoltschütze oder andere Trennelemente des Hochvoltenergiespeichers geöffnet, um den Hochvoltenergiespeicher von dem Antriebssystem zu trennen. Eine Verortung der zuvor erwähnten Trennelemente kann jedoch auch an anderer Stelle zwischen dem Hochvoltenergiespeicher und der Leistungselektronik oder in der Leistungselektronik umgesetzt werden.

Ein weiterer Aspekt der Erfindung betrifft ein Antriebssystem für ein Fahrzeug, wobei das Antriebssystems dazu eingerichtet ist, sich in einen sicheren Zustand zu verbringen, indem sich das Antriebssystem in einen Freilauf und in einen aktiven Kurzschluss verbringt, wobei das Antriebssystem dazu eingerichtet ist, das Verbringen in den Freilauf und das Verbringen in den aktiven Kurzschluss als eine zeitliche Abfolge von Freilauf und aktivem Kurzschluss durchzuführen, wobei das Antriebssystem dazu eingerichtet ist, sich dann in den Freilauf zu verbringen, wenn eine an einem Zwischenkreiskondensator des Antriebssystems anliegende Spannung eine erste Grenzwertspannung überschreitet, und wobei das Antriebssystem dazu eingerichtet ist, sich ausschließlich dann aus dem Freilauf in den aktiven Kurzschluss zu verbringen, wenn die an dem Zwischenkreiskondensator anliegende Spannung eine vorgegebene zweite Grenzwertspannung überschreitet oder wenn eine vorgegebene Zeitspanne abgelaufen ist.

Insbesondere wird das zuvor erläuterte Verfahren mit Hilfe des Antriebssystems durchgeführt.

In einem Ausführungsbeispiel ist das Antriebssystem dazu eingerichtet, die erste Grenzwertspannung dadurch dynamisch zu ermitteln, dass eine aktuelle Spannung gemessen und zu dieser ein fest vorgegebener Spannungsversatz addiert wird, um die erste Grenzwertspannung zu erhalten. Hierzu kann das Antriebssystem eine Recheneinheit aufweisen.

In einem Ausführungsbeispiel ist das Antriebssystem dazu eingerichtet, die erste Grenzwertspannung in vorgegebenen Zeitabständen zu aktualisieren. Die Zeitabstände können Hardware-abhängig vorgegeben werden.

In einem Ausführungsbeispiel ist das Antriebssystem dazu eingerichtet, die zweite Grenzwertspannung vorab zu ermitteln.

In einem Ausführungsbeispiel ist das Antriebssystem dazu eingerichtet, vor dem sich Verbringen in den aktiven Kurzschluss zu überprüfen, ob die an dem Zwischenkreiskondensator anliegende Spannung größer als die vorgegebene zweite Grenzwertspannung ist oder ob die vorgegebene Zeitspanne abgelaufen ist, wobei das Antriebssystem in dem Freilauf verbleibt, wenn die an dem Zwischenkreiskondensator anliegende Spannung kleiner als die vorgegebene zweite Grenzwertspannung ist oder wenn die vorgegebene Zeitspanne nicht abgelaufen ist.

Ein weiterer Aspekt der Erfindung betrifft ein Fahrzeug mit einem derartigen Antriebssystem.

Das Fahrzeug ist ein batterieelektrisches Fahrzeug oder ein Hybridfahrzeug. Das Fahrzeug ist insbesondere ein Personenkraftwagen.

Zu der Erfindung gehören auch Weiterbildungen des erfindungsgemäßen Antriebssystems und des erfindungsgemäßen Fahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Antriebssystems und des erfindungsgemäßen Fahrzeugs hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
Fig. 1 eine schematische Seitenansicht einer Ausführungsform eines Fahrzeugs;
Fig. 2 eine schematische Ansicht eines Antriebssystems für das Fahrzeug gemäß Fig. 1;
Fig. 3 eine weitere schematische Ansicht des Antriebssystems gemäß Fig. 2;
Fig. 4 ein schematisches Blockdiagramm einer Ausführungsform eines Verfahrens zum Verbringen des Antriebssystems gemäß Fig. 2 in einen sicheren Zustand;
Fig. 5 ein schematisches Blockdiagramm einer weiteren Ausführungsform eines Verfahrens zum Verbringen des Antriebssystems gemäß Fig. 2 in einen sicheren Zustand;
Fig. 6 zeigt schematisch eine Vorgehensweise zum dynamischen Ermitteln einer ersten Grenzwertspannung, wobei hier die erste Grenzwertspannung von einer am Zwischenkreiskondensator des Antriebssystems anliegenden Spannung nicht überschritten wird;
Fig. 7 zeigt erneut schematisch die Vorgehensweise zum dynamischen Ermitteln der ersten Grenzwertspannung gemäß Fig. 6, wobei hier die erste Grenzwertspannung von der am Zwischenkreiskondensator des Antriebssystems anliegenden Spannung überschritten wird; und
Fig. 8 zeigt erneut schematisch die Vorgehensweise zum dynamischen Ermitteln der ersten Grenzwertspannung gemäß Fig. 6, wobei hier die erste Grenzwertspannung als auch eine zweite Grenzwertspannung von der am Zwischenkreiskondensator des Antriebssystems anliegenden Spannung überschritten wird, wobei hier beim Überschreiten der zweiten Grenzwertspannung in den aktiven Kurzschluss geschaltet wird, um den weiteren Anstieg der am Zwischenkreiskondensator anliegenden Spannung zu stoppen.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

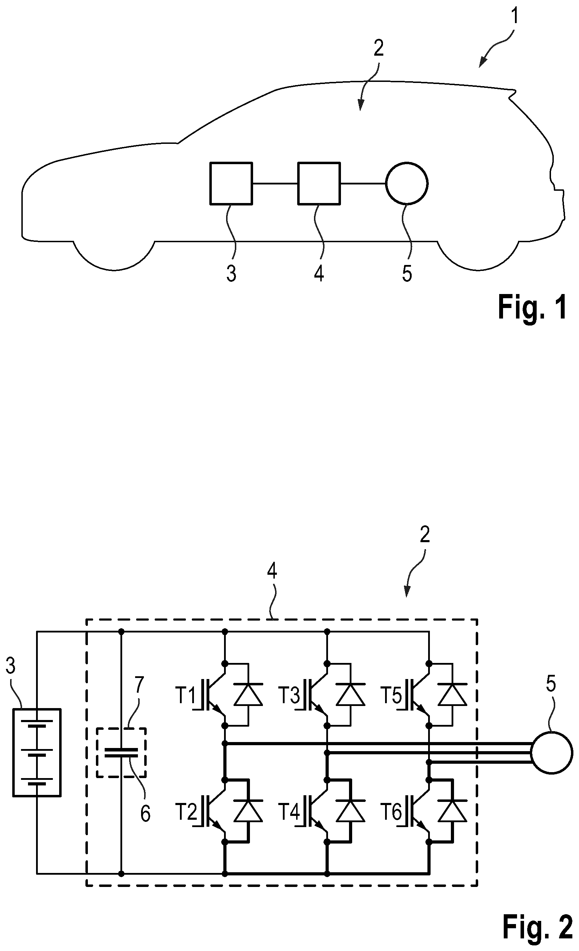

In Fig. 1 ist ein Fahrzeug 1 gezeigt. Das Fahrzeug 1 kann beispielsweise ein Personenkraftwagen sein. Das Fahrzeug 1 ist ein batterieelektrisches Fahrzeug (BEV) oder ein Hybridfahrzeug. Das Fahrzeug 1 weist ein Antriebssystem 2 auf. Das Antriebssystem 2 umfasst einen Hochvoltenergiespeicher 3, eine Leistungselektronik 4 und mehrere oder zumindest einen Antriebsmotor 5. Der Antriebsmotor 5 kann beispielsweise eine permanenterregte Synchronmaschine (PSM) oder eine fremderregte Synchronmaschine (FSM) sein.

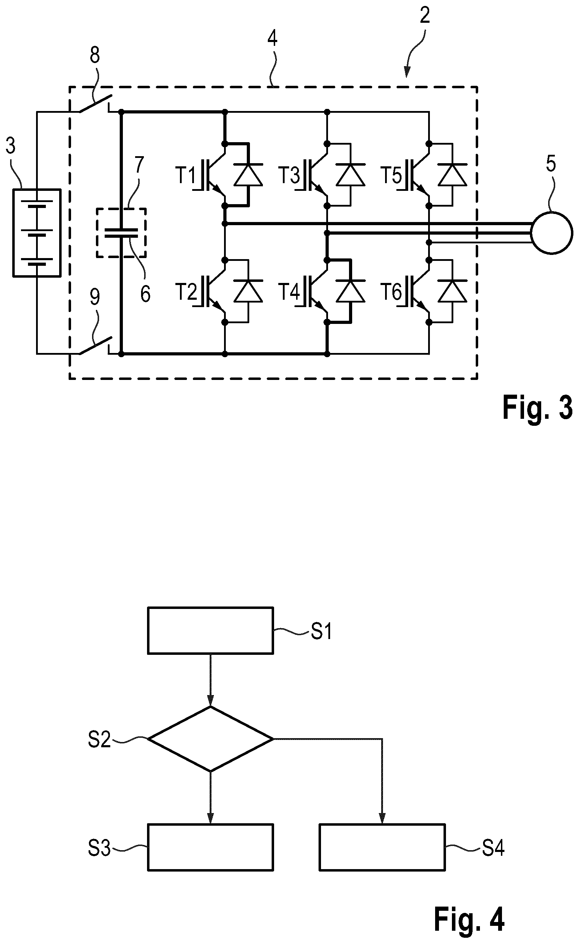

Die Fig. 2 und 3 zeigen jeweils eine schematische Ansicht einer Ausführungsform eines wie zuvor erläuterten Antriebssystems 2. Die Leistungselektronik 4 umfasst mehrere Leistungsschalter T1, T2, T3, T4, T5, T6 und einen Zwischenkreiskondensator 6. Die Leistungsschalter T1, T2, T3, T4, T5, T6 sind Leistungshalbleiterschalter. Der Zwischenkreiskondensator 6 ist Teil eines Pulswechselrichters (PWR) 7 der Leistungselektronik 4. Auch die Leistungsschalter T1, T2, T3, T4, T5, T6 können Teil des Pulswechselrichters 7 sein. Ferner umfasst die Leistungselektronik 4 Hochvoltschütze 8, 9.

Bei einer Anforderung des Fahrzeugs 1 an das Antriebssystem 2 oder bei einem Ausfall von Submodulen des Antriebssystems 2 muss das Antriebssystem 2 und/oder der Antriebsmotor 5 einen sicheren Modus oder einen sicheren Zustand einnehmen. Der sichere Zustand des Antriebsmotors 5 in Form einer permanenterregten Synchronmaschine ist je nach Drehzahl des Antriebsmotors 5 und Spannung des Hochvoltenergiespeichers 3 ein sogenannter aktiver Kurzschluss (AKS). Zum Herbeiführen des aktiven Kurzschlusses werden bei dem Antriebsmotor 5 Anschlussleitungen des Antriebsmotors 5 kurzgeschlossen. Der aktive Kurzschluss wird bei Fahrzeugen 1 mit elektrifiziertem Antriebskonzept als sicherer Zustand betrachtet. Ein wesentlicher Vorteil des aktiven Kurzschlusses ist die Spannungsfreiheit des Antriebssystems 2 bei Betriebssituationen wie Wartung oder Crash.

Der zuvor genannte aktive Kurzschluss ist in der Fig. 2 dargestellt und wird durch ein Schließen der drei oberen Leistungsschalter T1, T3, T5 oder der drei unteren Leistungsschalter T2, T4, T6 realisiert, da bei der Alternative Freilauf, mit anderen Worten einem Öffnen aller sechs Leistungsschalter T1, T2, T3, T4, T5, T6, und hinreichend hoher Drehzahl N des Antriebsmotors 5 eine gleichgerichtete induzierte Spannung U = f(N) des Antriebsmotors 5 größer als eine an dem Zwischenkreiskondensator 6 anliegende Spannung Udc wäre und dieser Fall zu einer unkontrollierten Rückspeisung von Energie in den Hochvoltenergiespeicher 3 und zu einem ungewollten Bremsmoment führen kann. Eine fehlende Drehzahl- und/oder Spannungsinformation oder eine Fehlfunktion innerhalb des Pulswechselrichters 7, wie beispielsweise der Ausfall eines Prozessors, eines Gatetreibers oder dergleichen, muss unabhängig davon immer zu einem sofortigen aktiven Kurzschluss führen. In der Fig. 2 ist der aktive Kurzschluss mit dicken Linien angedeutet.

Ein weiterer Anwendungsfall ist ein in der Fig. 3 dargestellter Lastabwurf. In der Fig. 3 ist der Lastabwurf mit dicken Linien angedeutet. Bei der Rekuperation wird die gewonnene Bremsenergie als Rekuperationsenergie dem Hochvoltenergiespeicher 3 zugeführt. Sollte dieser aufgrund eines Fehlers, zum Bauteilschutz oder aus anderen Gründen die Hochvoltschütze 8, 9 öffnen, um sich von dem Rest des Antriebssystems 2 zu trennen, wird die Rekuperationsenergie dem Zwischenkreiskondensator 6 des Pulswechselrichters 7 zugeführt, dessen Spannung folglich ansteigt. Zum Eigenschutz und Schutz anderer Hochvoltsysteme, die galvanisch mit dem Pulswechselrichter 7 verbunden sind, muss der Pulswechselrichter 7 diese Spannung begrenzen, wobei Udc > Uth gilt, weshalb folglich in den aktiven Kurzschluss geschaltet werden muss. Uth ist dabei eine Grenzspannung oder Grenzwertspannung.

Die Fig. 4 zeigt ein schematisches Blockdiagramm einer Ausführungsform eines Verfahrens oder einer Vorgehensweise zum Erreichen des sicheren Zustands des Antriebssystems 2 oder zum Betreiben des Antriebssystems 2. Dabei erfolgt in einem Schritt S1 eine Anforderung des sicheren Zustands. In einem Schritt S2 wird eine Unterscheidung dahingehend getroffen, ob U = f(N) > Udc oder N und/oder Udc unbekannt sind oder eine Fehlfunktion des Pulswechselrichters 7 vorliegt oder Udc > Uth oder nicht. Ist eine dieser Voraussetzungen mit ja zu beantworten, wird in einem Schritt S3 in den aktiven Kurzschluss geschaltet. Sind alle diese Voraussetzungen mit nein zu beantworten, wird in einem Schritt S4 in den Freilauf geschaltet.

Je nach Auslegung des Antriebsmotors 5 in Form einer permanenterregten Synchronmaschine prägen sich im aktiven Kurzschluss transiente Ströme im Kilo-Ampere-Bereich aus, die sowohl eine Belastung der Leistungsschalter T1, T2, T3, T4, T5, T6 als auch von Dauermagneten des Antriebsmotors 5 darstellen. Diese hohen Ströme bewirken in dem Antriebsmotor 5 eine hohe Feldstärke, die den Dauermagneten entgegenwirkt und somit potenziell zu einer (Teil-)Entmagnetisierung der Dauermagnete führen kann.

In den Leistungsschaltern T1, T2, T3, T4, T5, T6 können kurzzeitig sehr hohe Verluste entstehen, die wiederum zu sehr hohen Halbleitertemperaturen und/oder zum Ausfall von einigen oder allen Leistungsschaltern T1, T2, T3, T4, T5, T6 führen können. Dauermagnete mit einer hohen Koerzitivfeldstärke oder eine Vergrößerung der Halbleiterfläche, die der hohen Strombelastung widerstehen kann, stehen im Widerspruch zu einem kostengünstigen Antriebssystem 2. Bei einem Betrieb einer fremderregten Synchronmaschine anstatt einer permanenterregten Synchronmaschine als Antriebsmotor 5 entstehen im aktiven Kurzschluss zum Teil noch höhere transiente Ströme mit den bereits beschriebenen negativen Effekten des Pulswechselrichters 7.

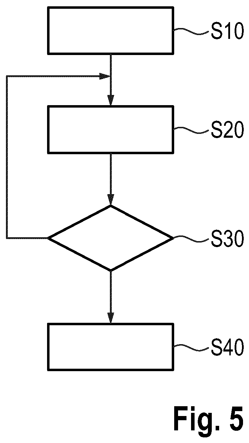

Um diese negativen Effekte zu vermeiden, wird ein in der Fig. 5 als schematisches Blockdiagramm gezeigtes Verfahren zum Erreichen des sicheren Zustands des Antriebssystems 2 oder zum Betreiben des Antriebssystems 2 vorgeschlagen. In einem Schritt S10 wird der sichere Zustand angefordert. In einem Schritt S20 wird in den Freilauf geschaltet, wenn die an dem Zwischenkreiskondensator 6 anliegende Spannung Udc eine erste Grenzwertspannung Uth1 überschreitet. Mit der ersten Grenzwertspannung Uth1 ist in einem Ausführungsbeispiel eine "Grenzwertspannung-Reaktion-Freilauf" repräsentiert werden. Dies bedeutet dabei, dass bei einem Überschreiten der ersten Grenzwertspannung Uth1 als Reaktion in den Freilauf geschaltet wird.

Wenn die an dem Zwischenkreiskondensator 6 anliegende Spannung Udc die erste Grenzwertspannung Uth1 nicht überschreitet, liegt ein Normalbetrieb des Antriebsystems 2 vor. Hier taktet beispielsweise ein Inverter des Antriebssystems 2 ordnungsgemäß und somit kann hier speziell ein Drehmoment bereitgestellt werden.

Optional kann es vorkommen, dass zunächst die an dem Zwischenkreiskondensator 6 anliegende Spannung Udc eine erste Grenzwertspannung Uth1 überschreitet. Jedoch kann anschließend eine Spannungssenkung eintreten. In diesem Fall kann das Antriebssystem 2 im Freilauf verbleiben, bis ein Reset, also Neustart, des System durchgeführt wird. Anschließend kann das Antriebssystem 2 wieder in den Normalbetrieb überführt werden.

In einem Schritt S30 wird überprüft, ob die an dem Zwischenkreiskondensator 6 anliegende Spannung Udc größer als eine zweite Grenzwertspannung Uth2 ist oder nicht. Alternativ wird überprüft, ob eine vorgegebene Zeitspanne von beispielsweise wenigen Millisekunden abgelaufen ist. Mit der zweiten Grenzwertspannung Uth2 ist in einem Ausführungsbeispiel eine "Grenzwertspannung-Aktiver-Kurzschluss" repräsentiert. Dies bedeutet dabei, dass bei einem Überschreiten der zweiten Grenzwertspannung Uth2 in den aktiven Kurzschluss geschaltet wird. Die beiden Grenzwertspannungen Uth1, Uth2 unterscheiden sich in ihren Spannungswerten voneinander, wobei Uth2 > Uth1 ist. Ist die Bedingung Udc >Uth2 erfüllt, so wird in einem Schritt S40 in den aktiven Kurzschluss geschaltet. Ist diese vorgenannte Bedingung nicht erfüllt, es gilt also Udc < Uth2 wird weiterhin der Schritt S20 durchgeführt, also der Freilauf. Ist die vorgegebene Zeitspanne abgelaufen, wird ebenfalls in dem Schritt S40 in den aktiven Kurzschluss geschaltet. Ist die vorgegebene Zeitspanne nicht abgelaufen, wird weiterhin der Freilauf durchgeführt.

Der sichere Zustand ist somit eine zeitliche Abfolge von Freilauf und aktivem Kurzschluss. Dies ist so zu verstehen, dass zunächst in den Freilauf und anschließend, also zeitlich nachfolgenden, in den aktiven Kurzschluss geschaltet wird. Die Besonderheit besteht darin, dass der Freilauf nur wenige Millisekunden eingesetzt wird, unabhängig davon, ob es zu einer unkontrollierten Rückspeisung in den Hochvoltenergiespeicher 3 kommt oder nicht. Ein sich aufbauendes Bremsmoment ist bis zu diesem Zeitpunkt hinreichend klein, sodass es zu keinem Haftungsabriss von Reifen des Fahrzeugs 1 und einer Straße führt, auf der sich das Fahrzeug 1 fortbewegt. Durch die kurze Freilaufzeit wird jedoch die in der Induktivität des Antriebsmotors 5 gespeicherten Energie hinreichend weit abgebaut. In dem darauffolgenden Schritt S40 des aktiven Kurzschlusses prägt sich daher nur ein sehr viel kleinerer transienter Strom aus, der damit vorteilhaft für die Leistungsschalter T1, T2, T3, T4, T5, T6 in dem Pulswechselrichter 7 und die Dauermagnete des Antriebsmotors 5 ist.

Die im Falle eines Lastabwurfs ansteigende Spannung Udc an dem Zwischenkreiskondensator 6 des Pulswechselrichters 7 steigt jedoch mit einer Anstiegszeit an, die schneller als die beschriebenen wenigen Millisekunden ist. Aber auch in diesem Fall kann durch den Energieeintrag in den Zwischenkreiskondensator 6 bis zum Erreichen der zweiten Grenzwertspannung Uth2 die magnetische Energie in dem Antriebsmotor 5 hinreichend weit abgebaut werden, so dass der nachfolgende transiente Strom im aktiven Kurzschluss hinreichend klein ist. Eine Spannungsdiagnose dahingehend, ob Udc > Uth2 ist, muss daher schon vorzeitig einen aktiven Kurzschluss auslösen können. Die Grenzwertspannungen Uth1, Uth2 können vorab fest definiert und/oder dynamisch errechnet werden.

Gegenüber der in der Fig. 4 gezeigten Vorgehensweise besteht die Besonderheit des Verfahrens gemäß der Fig. 5 darin, dass eine unkontrollierte Rückspeisung für wenige Millisekunden durch den wenigen Millisekunden andauernden Freilauf zum Energietransport in den Hochvoltenergiespeicher 3 oder in den Zwischenkreiskondensator 6 zugelassen wird. Im Falle des Spannungsanstiegs, wenn der Hochvoltenergiespeicher 3 abgetrennt wird, wird die drohende Überspannung statt durch die bisherige einstufige Reaktion in Form des aktiven Kurzschlusses gemäß dem Schritt S3 dann durch eine zweistufige, spannungsabhängige Reaktion verhindert. Mit anderen Worten wird, wenn gilt Udc > Uth1 in den Freilauf geschaltet, und wenn gilt Udc > Uth2 wird aus dem Freilauf in den aktiven Kurzschluss geschaltet.

Alternativ zum zeitlichen Ablauf mit einer bestimmten Dauer für die Freilaufphase, kann der Wechsel von dem Freilauf zu dem aktiven Kurzschluss auch durch einen bestimmten Wert des Phasenstroms ausgelöst werden. Der Phasenstrom sinkt in der Freilaufphase durch den Energieübertrag von dem Antriebsmotor 5 zu dem Hochvoltenergiespeicher 3 oder dem Zwischenkreiskondensator 6 ab. Ein geeigneter Schwellwert des Phasenstroms kann hierbei als Trigger zum Wechsel von dem Freilauf zu dem aktiven Kurzschluss dienen. Hierzu muss jedoch der Phasenstrom gemessen und ausgewertet werden.

Bei der zuvor erläuterten zeitlichen Folge der Umschaltung zwischen Freilauf und aktivem Kurzschluss gemäß der Fig. 5 kann vorteilhafterweise auf die Verfügbarkeit vieler Bauteile verzichtet werden, was zu einer größeren Verfügbarkeit der Funktion führt. Die Vorteile des Verfahrens gemäß der Fig. 5 liegen in der Reduzierung der Halbleiterfläche im Phasenwechselrichter 7 und in der günstigeren Auswahl der Dauermagnete des Antriebsmotors 5 aufgrund deren chemischer Zusammensetzung.

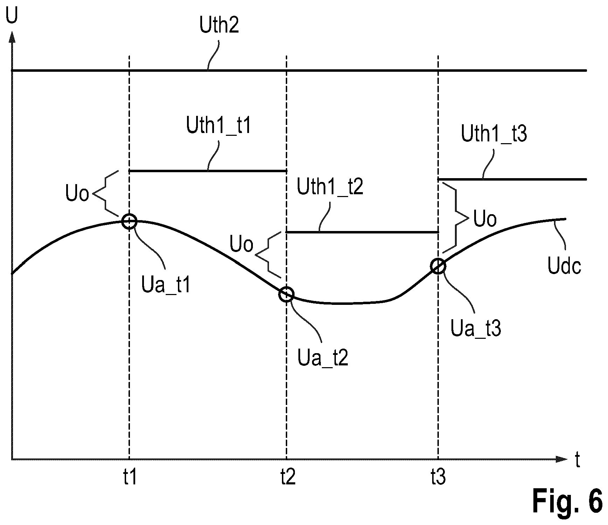

Die Fig. 6, 7 und 8 zeigen jeweils schematisch eine Vorgehensweise zum dynamischen Ermitteln der ersten Grenzwertspannung Uth1. Insbesondere ist in den Fig. 6, 7 und 8 jeweils ein Spannungs-Zeit-Diagramm, bei dem auf der Rechtsachse die Zeit t und auf der Hochachse die Spannung U aufgetragen ist, dargestellt.

Hierbei wird in definierten Zeitabständen t1, t2, t3 eine aktuelle Spannung Ua_t1, Ua_t2, Ua_t3 erfasst. Ein Abstand der Zeitabstände t1, t2, t3 voneinander kann beispielsweise 100 µs betragen. Zu der jeweiligen aktuellen Spannung Ua_t1, Ua_t2, Ua_t3 wird ein fest definierter Offset oder Spannungsversatz Uo addiert, um eine jeweilige erste Grenzwertspannung Uth1_t1, Uth1_t2, Uth1_t3 zu erhalten. Die somit definierte erste Grenzwertspannung Uth1_t1, Uth1_t2, Uth1_t3 gilt jeweils bis zum Beginn des folgenden Zeitabstands t1, t2, t3. So gilt beispielsweise die erste Grenzwertspannung Uth1_t1 von dem Zeitabstand t1 bis zu dem Zeitabstand t2. Im normalen Betrieb, wie dieser in der Fig. 6 gezeigt ist, wird der Spannungsversatz Uo groß genug gewählt, und den zu erwartenden Spannungsanstieg tolerieren zu können.

Beispielsweise kann der Spannungsversatz Uo eine Konstante, die beispielsweise zwischen 10V und 30V liegt, sein. Optional kann der Spannungsversatz Uo abhängig von den elektrischen Eigenschaften des Antriebssystems 2 festgelegt werden. Diese Konstante kann den zu erwartenden Spannungsrippel und Spannungsänderungen durch den Normalbetrieb innerhalb eines Zeitschritts, wie beispielsweise Betriebspunktänderung von Motorbetrieb in Generatorbetrieb, berücksichtigen.

Der Vorteil der dynamischen Ermittlung der ersten Grenzwertspannung Uth1 liegt darin, dass im Vergleich zu einer fest vorgegebenen ersten Grenzwertspannung Uth1 ein Spannungsunterschied zwischen der jeweiligen dynamisch ermittelten ersten Grenzwertspannung Uth1_t1, Uth1_t2, Uth1_t3 und der zweiten Grenzwertspannung Uth2 meistens größer ist. Dies ist abhängig von einer Batteriespannung des Hochvoltenergiespeichers 3 und dessen Ladezustand. Der größere Spannungsunterschied resultiert in einer längeren Freilaufzeit, in der mehr Energie aus dem Antriebsmotor 5 abgebaut werden kann, was letztendlich zu einem geringeren Strom im aktiven Kurzschluss führt.

Gegebenenfalls kann auf den aktiven Kurzschluss ganz verzichtet werden, da die zweite Grenzwertspannung Reaktion Uth2 nicht mehr erreicht wird.

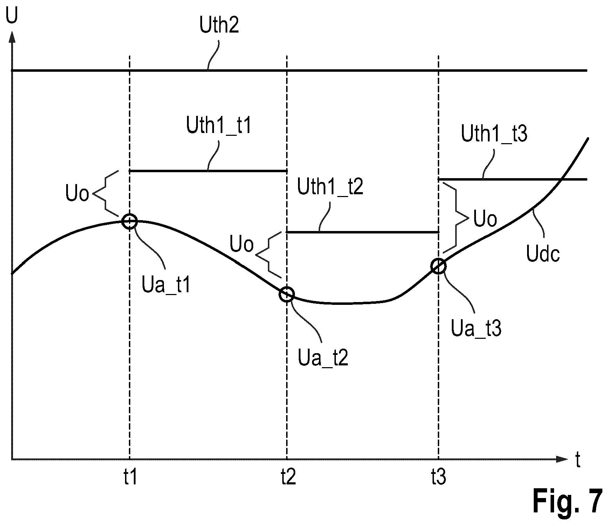

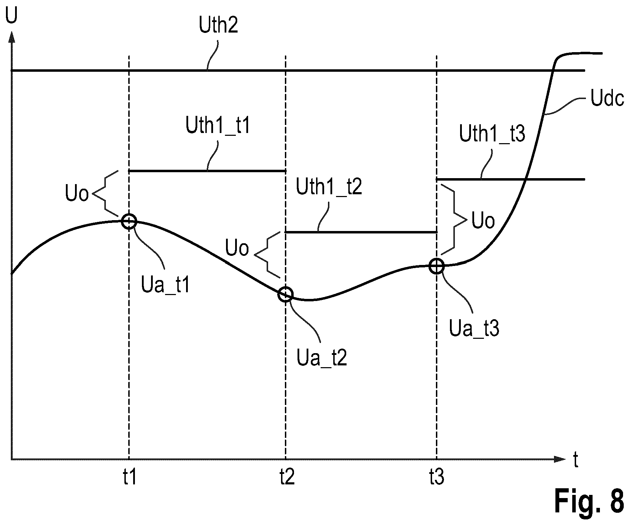

Die Fig. 7 zeigt eine Überschreitung der ersten Grenzwertspannung Uth1_t3 im Falle eines Lastabwurfs. Als Reaktion auf diese Überschreitung wird zunächst in den Freilauf geschaltet, und wobei bei einer Überschreitung der zweiten Grenzwertspannung Uth2 wird in den aktiven Kurzschluss geschaltet. Ein Überschreiten der zweiten Grenzwertspannung Uth2 durch die anliegende Spannung Udc ist beispielsweise in der Fig. 8 gezeigt. In der Fig. 8 ist beispielhaft dargestellt, dass beim Überschreiten der zweiten Grenzwertspannung Uth2 in den aktiven Kurzschluss geschaltet wird, um sie anliegende Spannung Udc zu begrenzen. Mit anderen Worten ausgerückt, kann der weitere Spannungsanstieg der anliegenden Spannung Udc beim Überschreiten der zweiten Grenzwertspannung Uth2 kurz darauf durch Schalten in den aktiven Kurzschluss gestoppt werden, wie es in der Fig. 8 schematisch gezeigt ist.

### Bezugszeichenliste

- 1: Fahrzeug
- 2: Antriebssystem
- 3: Hochvoltenergiespeicher
- 4: Leistungselektronik
- 5: Antriebsmotor
- 6: Zwischenkreiskondensator
- 7: Pulswechselrichter
- 8: Hochvoltschütz
- 9: Hochvoltschütz
- S1: Schritt
- S2: Schritt
- S3: Schritt
- S4: Schritt
- S10: Schritt
- S20: Schritt
- S30: Schritt
- S40: Schritt
- t: Zeit
- t1: Zeitabstand
- t2: Zeitabstand
- t3: Zeitabstand
- T1: Leistungsschalter
- T2: Leistungsschalter
- T3: Leistungsschalter
- T4: Leistungsschalter
- T5: Leistungsschalter
- T6: Leistungsschalter
- U: Spannung
- Ua_t1: Spannung
- Ua_t2: Spannung
- Ua_t3: Spannung
- Udc: Spannung
- Uo: Spannungsversatz
- Uth1: vorgegebene erste Grenzwertspannung
- Uth1_t1: dynamisch bestimmte erste Grenzwertspannung
- Uth1_t2: dynamisch bestimmte erste Grenzwertspannung
- Uth1_t3: dynamisch bestimmte erste Grenzwertspannung
- Uth2: vorgegebene zweite Grenzwertspannung

## Patentansprüche

1. Verfahren zum Verbringen eines Antriebssystems (2) in einen sicheren Zustand, bei dem folgende Schritte durchgeführt werden:
- Verbringen (S20) des Antriebssystems (2) in einen Freilauf, wenn eine an einem Zwischenkreiskondensator (6) des Antriebssystems (2) anliegende Spannung (Udc) eine erste Grenzwertspannung (Uth1, Uth1_t1, Uth1_t2, Uth1_t3) überschreitet, und
- Verbringen (S40) des Antriebssystems (2) in einen aktiven Kurzschluss,
wobei das Verbringen (S20) in den Freilauf und das Verbringen (S40) in den aktiven Kurzschluss als eine zeitliche Abfolge von Freilauf und aktivem Kurzschluss durchgeführt wird, und wobei das Antriebssystem (2) ausschließlich dann aus dem Freilauf in den aktiven Kurzschluss verbracht wird, wenn die an dem Zwischenkreiskondensator (6) anliegende Spannung (Udc) eine vorgegebene zweite Grenzwertspannung (Uth2) überschreitet oder wenn eine vorgegebene Zeitspanne abgelaufen ist.

2. Verfahren nach Anspruch 1, wobei die erste Grenzwertspannung (Uth1, Uth1_t1, Uth1_t2, Uth1_t3) dadurch dynamisch ermittelt wird, dass eine aktuelle Spannung (Ua_t1, Ua_t2, Ua_t3) gemessen und zu dieser ein fest vorgegebener Spannungsversatz (Uo) addiert wird, um die erste Grenzwertspannung (Uth1, Uth1_t1, Uth1_t2, Uth1_t3) zu erhalten.

3. Verfahren nach Anspruch 2, wobei die erste Grenzwertspannung (Uth1, Uth1_t1, Uth1_t2, Uth1_t3) in vorgegebenen Zeitabständen (t1, t2, t3) aktualisiert wird.

4. Verfahren nach einem der Ansprüche 1 bis 3, wobei die zweite Grenzwertspannung (Uth2) vorab ermittelt wird.

5. Verfahren nach einem der Ansprüche 1 bis 4, wobei vor dem Verbringen des Antriebssystems (2) in den aktiven Kurzschluss überprüft wird, ob die an dem Zwischenkreiskondensator (6) anliegende Spannung (Udc) größer als die zweite Grenzwertspannung (Uth2) ist oder ob die vorgegebene Zeitspanne abgelaufen ist, und wobei das Antriebssystem (2) in dem Freilauf verbleibt, wenn die an dem Zwischenkreiskondensator (6) anliegende Spannung (Udc) kleiner als die vorgegebene zweite Grenzwertspannung (Uth2) ist oder wenn die vorgegebene Zeitspanne nicht abgelaufen ist.

6. Verfahren nach einem der Ansprüche 1 bis 5, wobei der Freilauf unabhängig von einer Rückspeisung von Energie in einen Hochvoltenergiespeicher (3) des Antriebssystems (2) und/oder in den Zwischenkreiskondensator (6) durchgeführt wird.

7. Verfahren nach Anspruch 6, wobei während des Freilaufs Energie in den Hochvoltenergiespeicher (3) und/oder in den Zwischenkreiskondensator (6) rückgespeist wird.

8. Verfahren nach einem der Ansprüche 1 bis 7, wobei während des Freilaufs Energie in einem Antriebsmotor (5) des Antriebssystems (2) abgebaut wird.

9. Verfahren nach einem der Ansprüche 1 bis 8, wobei die erste Grenzwertspannung (Uth1, Uth1_t1, Uth1_t2, Uth1_t3) im Falle eines Lastabwurfs überschritten wird.

10. Antriebssystem (2) für ein Fahrzeug (1), wobei das Antriebssystems (2) dazu eingerichtet ist, sich in einen sicheren Zustand zu verbringen, indem sich das Antriebssystem (2) in einen Freilauf und in einen aktiven Kurzschluss verbringt, wobei das Antriebssystem (2) dazu eingerichtet ist, das Verbringen in den Freilauf und das Verbringen in den aktiven Kurzschluss als eine zeitliche Abfolge von Freilauf und aktivem Kurzschluss durchzuführen, wobei das Antriebssystem (2) dazu eingerichtet ist, sich dann in den Freilauf zu verbringen, wenn eine an einem Zwischenkreiskondensator (6) des Antriebssystems (2) anliegende Spannung (Udc) eine erste Grenzwertspannung (Uth1, Uth1_t1, Uth1_t2, Uth1_t3) überschreitet, und wobei das Antriebssystem (2) dazu eingerichtet ist, sich ausschließlich dann aus dem Freilauf in den aktiven Kurzschluss zu verbringen, wenn die an dem Zwischenkreiskondensator (6) anliegende Spannung (Udc) eine vorgegebene zweite Grenzwertspannung Reaktion (Uth2) überschreitet oder wenn eine vorgegebene Zeitspanne abgelaufen ist.

11. Antriebssystem nach Anspruch 10, wobei das Antriebssystem (2) dazu eingerichtet ist, die erste Grenzwertspannung (Uth1, Uth1_t1, Uth1_t2, Uth1_t3) dadurch dynamisch zu ermitteln, dass eine aktuelle Spannung (Ua_t1, Ua_t2, Ua_t3) gemessen und zu dieser ein fest vorgegebener Spannungsversatz (Uo) addiert wird, um die erste Grenzwertspannung (Uth1, Uth1_t1, Uth1_t2, Uth1_t3) zu erhalten.

12. Antriebssystem nach Anspruch 11, wobei das Antriebssystem (2) dazu eingerichtet ist, die erste Grenzwertspannung (Uth1, Uth1_t1, Uth1_t2, Uth1_t3) in vorgegebenen Zeitabständen (t1, t2, t3) zu aktualisieren.

13. Antriebssystem nach einem der Ansprüche 10 bis 12, wobei das Antriebssystem (2) dazu eingerichtet ist, die zweite Grenzwertspannung (Uth2) vorab zu ermitteln.

14. Antriebssystem nach einem der Ansprüche 10 bis 13, wobei das Antriebssystem (2) dazu eingerichtet ist, vor dem sich Verbringen in den aktiven Kurzschluss zu überprüfen, ob die an dem Zwischenkreiskondensator (6) anliegende Spannung (Udc) größer als die vorgegebene zweite Grenzwertspannung (Uth2) ist oder ob die vorgegebene Zeitspanne abgelaufen ist, wobei das Antriebssystem (2) in dem Freilauf verbleibt, wenn die an dem Zwischenkreiskondensator (6) anliegende Spannung (Udc) kleiner als die vorgegebene zweite Grenzwertspannung (Uth2) ist oder wenn die vorgegebene Zeitspanne nicht abgelaufen ist.

15. Fahrzeug (1) mit einem Antriebssystem (2) nach einem der Ansprüche 10 bis 14.
